# EUROPEAN PATENT APPLICATION

(11) **EP 1 258 455 A1**
(43) Date of publication of application: **20.11.2002**
(21) Application number: 01500123.3
(22) Date of filing: 17.05.2001
(51) Int. Cl.: C01B 15/08, C01D 5/00

(54) **Industrial procedure for obtaining a stable adduct of NA2S04, NaCl and H2O2**

(71) Applicant: FMC Foret S.A., 08008 Barcelona (ES)
(72) Inventor: Forner Benito, Juan, 08008 Barcelona (ES); Artigas Puerto, Ramon, 08008 Barcelona (ES)
(74) Representative: Perez Bonal, Bernardo

(57) **Abstract**

The procedure comprises obtaining a adduct of the formula 4Na₂SO₄.2H₂O₂.NaCl in a fashion integrated into the manufacture of Na₂SO₄, regardless of the production procedure for Na₂SO₄ and in any of the stages thereof, by means of the addition to a working solution that comprises Na₂SO₄, NaCl and H₂O₂ of a source of Na₂SO₄, a source of NaCl and a source of H₂O₂, in sufficient quantities to obtain said SPS adduct and the separation of said adduct. The procedure is applicable to the Na₂SO₄ producing industry and allows the impure residues, solid or in solution, of mineral origin or generated as a sub-product in other industries to be used and/or the changing of the production of sodium sulphate partially or completely, to obtain said adduct useful in washing powders as a whitener.

## Description

### FIELD OF THE INVENTION

The invention relates to a procedure, applicable to the Na₂SO₄ producing industry, which allows the impure residues, solids or in solution, of mineral origin or generated as a sub-product in other industries to be used and/or to change the production of sodium sulphate partially or totally, to obtain an adduct of the formula 4Na₂SO₄.2H₂O₂. NaCl useful in the sector of washing powders as a whitener.

### BACKGROUND OF THE INVENTION

For the industrial scale manufacture of Na₂SO₄ anhydride, the following are used as raw materials: (i) minerals, mainly Thenardite (Na₂SO₄) and/or Glauberite (Na₂SO₄ . CaSO₄), with impurities of clays, Halite (NaCl) and others; or (ii) impure Na₂SO₄, sub-product of the manufacture of other chemical products, which, after being purified, should be recovered starting from an aqueous solution.

For the manufacture of Na₂SO₄ the direct process or the process via the Glauber salt is used.

The direct process comprises the stages of dissolving the mineral or Na₂SO₄ sub-product, purification of the solutions (commonly denominated lyes) of insoluble elements or those separable by precipitation and crystallisation of Na₂SO₄ in anhydrous form by means of multiple concentration effect or by recompression of the vapours. To prevent the loss of purity of the product, it is necessary to purge an effluent rich in NaCl to the outside, which, if it is not treated, causes environmental contamination.

The process via the Glauber salt comprises the stages of dissolving the mineral or Na₂SO₄ subproduct, purification of the lyes of insoluble elements or those separable by precipitation, cooling to low temperatures to crystallise the Glauber salt (Na₂SO₄. 10H₂O) and separation thereof from the parent liquors that are used to dissolve more mineral or Na₂SO₄ subproduct. Just as in the direct process, it is necessary to eliminate soluble impurities (NaCl) by means of a purge of effluents, which, if they are not treated, cause environmental contamination. The Glauber salt, as it is molten, provides a part of the Na₂SO₄ in solid form and some parent liquors from which the remaining sodium sulphate is recovered by crystallisation through multiple concentration effect or by recompression of vapours.

The adduct of formula 4Na₂SO₄.2H₂O.NaCl, herein after, SPS, is a known product, obtained by crystallisation from pure Na₂SO₄ and NaCl dissolved in H₂O₂ as described in the US patents 3.979.312, 3.979.313 and 4.005.182. This crystalline compound (SPS), formed by neutral and non-toxic salts, has good properties as a whitener, and so it has an application as a whitener in the washing powder industry as a substitute for sodium perborate (SPB) and sodium percarbonate (SPC) that provides a harmful residual alkalinity for the environment.

The adduct, as referred to in the present invention, can be obtained at any stage of any procedure for the manufacture of Na₂SO₄, such that this practice can be applied both to completely avoid the purge of salts to the environment and for changing part or all of the production of Na₂SO₄ to that of SPS. SPS, because it is obtained in integral fashion from the manufacture of Na₂SO₄ itself, does not require additional investments and, as it derives from abundant and cheap salts, is produced at a very low cost in comparison with other persalts (SPB or SPC).

The industrial manufacture of Na₂SO₄ from mineral or impure sub-product generates residual waters that require an expensive treatment, so as not to contravene environmental legislation, and does not have any repercussions on the economic costs for the manufacturer. However, the possibility of manufacturing Na₂SO₄ and SPS in the same installation allows the environmental problems to be overcome and, at the same time, makes production more flexible to respond to the demands of the market.

### DETAILED DESCRIPTION OF THE INVENTION

The invention provides a procedure for obtaining the adduct 4Na₂SO₄.2H₂O₂.NaCl (SPS), in a fashion integrated into the production of Na₂SO₄, regardless of the procedure for the production of Na₂SO₄, and in any of its stages, hereinafter the procedure of the invention, which comprises adding a working solution that comprises Na₂SO₄, NaCl and H₂O₂, a source of Na₂SO₄, a source of NaCl and a source of H₂O₂, in sufficient quantities to obtain said SPS adduct and separate said adduct.

The procedure for the production of Na₂SO₄ can be any procedure for production of Na₂SO₄, for example the direct process or the process via the Glauber salt.

The procedure of the invention comprises the preparation of a working solution consisting of an aqueous solution that comprises Na₂SO₄, NaCl and H₂O₂. Said working solution can be prepared by any appropriate method, for example, adding H₂O₂ to an aqueous solution of Na₂SO₄ and NaCl. In another particular embodiment of the invention, said working solution comprises NaCl at a concentration lying between 100 and 300 g/l, preferably, 250 g/l. In another particular embodiment, the working solution comprises H₂O₂ at a concentration lying between 100 and 700 g/l, preferably 150 g/l.

In a particular embodiment, after the preparation of the working solution, some crystals of the SPS adduct are formed, at which time, keeping the volume constant, a source of Na₂SO₄, a source of NaCl and a source of H₂O₂ are added, adjusting the quantities of each one of said sources to the stoichiometry of the SPS adduct to obtain said SPS adduct and separate it from the medium.

The source of NaCl can be any source able to provide NaCl, both in solid and liquid form, for example, a lye solution of a mineral that contains NaCl, for example, Halite. At times, the source of Na₂SO₄ may contain NaCl and, in the event that the NaCl were not present in the appropriate stoichiometry, the additional quantity of NaCl necessary to satisfy the stoichiometry would be added, either directly to the working solution or else mixed, for example, dissolved, beforehand in the H₂O₂ source.

The source of Na₂SO₄ may be any source able to provide Na₂SO₄, in solid, liquid or molten form, for example, a solution lye of a mineral that contains Na₂SO₄, for example, Thenardite, Glauberite, Mirabilite and mixtures thereof, or a sub-product recovery lye, for example, a lye that comprises impure Na₂SO₄ from any process in which said lye is generated. The source of Na₂SO₄ can also contain NaCl. Therefore, in a particular embodiment, the source of Na₂SO₄ for obtaining the SPS adduct according to the procedure of the invention is selected from (i) parent liquors of crystallisation of anhydrous Na₂SO₄, which comprise Na₂SO₄ and a low concentration of NaCl, (ii) purges of Na₂SO₄, a high concentration of NaCl, (iii) Na₂SO₄.10H₂O, (iv) molten Na₂SO₄.10H₂O, (v) parent liquors of crystallisation of Na₂SO₄.H₂O, (vi) mother liquors from fusion of Na₂SO₄.10H₂O, and (vii) mixtures thereof. The concentration of Na₂SO₄ in the source of Na₂SO₄ may vary within a broad range, although, in a particular embodiment, the concentration of Na₂SO₄ in the source of Na₂SO₄ lies between 5 % and 44.1 %.

The source of H₂O₂ can be any source that provides H₂O₂. In a particular embodiment, said source of H₂O₂ is an aqueous solution of H₂O₂, with a variable concentration, for example, in which the concentration of H₂O₂ lies between 20 % and 70 %, preferably between 30 and 50 %. At times, the source of H₂O₂ is used to dissolve the NaCl and/or Na₂SO₄ and for adding said compounds to the working solution. Therefore, in a particular embodiment, the concentration of NaCl dissolved in H₂O₂ lies between 0 and 300 g/l, while in the another particular embodiment, the concentration of Na₂SO₄ dissolved in H₂O₂ lies between 0 and 300 g/l.

The procedure of the invention can be performed at a working temperature lying between 10° C and 80° C, preferably between 45° C and 55° C.

The separation of the SPS adduct can be carried out with conventional methods, for example, by filtration.

The SPS adduct obtained by the procedure of the invention is intrinsically very stable, as it does not decompose until it reaches 180° C. Said adduct, once dry, contains up to 4.6 % of active oxygen. For its application as a whitener in alkaline washing powder formulations, it needs a stabilising additive, for example, Mg salts, stannates, dipicolinic acid, phosphonates, etc. Therefore, in a particular embodiment, the procedure of the invention comprises, in addition, the stage of adding said stabilising additive accompanying the H₂O₂ to the other components (Ha₂SO₄, NaCl). In a particular realisation, said stabilising additive is of the polyphosphonate type, for example, DEQUEST 2000 from Monsanto, which is incorporated preferably dissolved in H₂O₂ used for the granulation.

By means of the procedure of the invention, the SPS adduct is obtained and at the same time the generation of effluents in the production of Na₂SO₄ is avoided and, as a result, treatment thereof is not required. Conversely, the procedure of the invention, as it does not start from the pure salts in solid state, which would imply an additional cost for the SPS and would reduce its competitiveness against SPB and SPC, and as it can be applied to any stage of the manufacturing process or the process of recovery of Na₂SO₄ or of recovery from its residual waters containing or not containing NaCl, it is a simple, economical and ecological production procedure for the SPS adduct, a product with a certain added value.

### EXAMPLES

Several examples are described based on normal situations, in both industrial manufacturing and recovery of Na₂SO₄.

### EXAMPLE 1

In order to carry out this test an aqueous solution was prepared containing 250 g of NaCl/l and saturated with Na₂SO₄. It was kept boiling at 50 ± 2° C at its equilibrium pressure. Next, H₂O₂ 50 % was added slowly and maintaining a constant volume until the appearance of the first crystals. From this moment on, and maintaining the volume constant, lyes from the dissolution of Thenardite and Glauberite were added to this working mixture in accordance with the stoichiometry of the adduct. The composition by weight was 28.34% of Na₂SO₄ and 0.51 % of NaCl and H₂O₂ 50% containing the NaCl necessary in solution to adjust the stoichiometry of the adduct.

The operation was interrupted when the concentration of crystals in the solution reached approximately 200 g/l. After filtration and drying, a product was obtained (SPS) with a content in active oxygen of 4.53 %.

The yields of transformation of the raw materials were greater than 99 % for sodium sulphate and chloride and greater than 90 % for H₂O₂.

### EXAMPLE 2

Starting from the working solution described in Example 1, parent liquors from a crystalliser of anhydrous Na₂SO₄ were added whose composition by weight was 27.5 % of Na₂SO₄ and 1.67 % of NaCl, and H₂O₂ 50 %, containing the NaCl necessary in solution to adjust the stoichiometry of the adduct.

Once the concentration of 200 g crystal/l had been reached, the operation was interrupted. The product (SPS) contained 4.51 % of active oxygen when dry.

The yields of transformation of raw materials were similar to those of Example 1.

### EXAMPLE 3

Final purges of crystallisation of anhydrous Na₂SO₄ containing 23.2 % of Na₂SO₄, 12.2 % of NaCl and 5.9 % of MgSO₄ were alkalinised with NaOH to precipitate the Mg(OH)₂ which was separated by filtration.

To a working solution base prepared as described in Example 1, the purified purges neutralised with Na₂SO₄ and H₂O₂ 50 % containing dissolved Na₂SO₄ to complete the stoichiometry of the adduct were added slowly in stoichiometric proportion and maintaining the volume through evaporation at 50 ± 2° C.

Once the concentration of 200 g crystal/l had been reached, the operation was interrupted. The product (SPS) contained 4.54 % of active oxygen when dry.

The yields of transformation of raw materials were similar to those of Example 1.

### EXAMPLE 4

To the working solution of Example 1, Na₂SO₄.10H₂O was added in small batches. H₂O₂ 40 % containing the NaCl necessary to maintain the stoichiometry was also added in continuous fashion. The volume was kept constant through evaporation at 50 ± 2° C

Once the concentration of 200 g crystal/l had been reached, the operation was interrupted. The product (SPS) contained 4.53 % of active oxygen when dry.

The yields of transformation of raw materials were similar to those of Example 1.

### EXAMPLE 5

To the working solution of Example 1, molten Na₂SO₄.10H₂O was added along with the H₂O₂ 40 % containing the NaCl necessary, both in accordance with the stoichiometry of the adduct. The volume was kept constant through evaporation at 50 ± 2° C

As in the previous examples, once the concentration of 200 g crystal/l had been reached, the operation was interrupted.

The product (SPS) contained 4.56 % of active oxygen when dry. The yields of transformation of raw materials were similar to those of Example 1.

### EXAMPLE 6

Parent liquors from the crystallisation of Na₂SO₄.10H₂O containing 7 % of Na₂SO₄ and 15 % of NaCl were added to the working solution from Example 1 along with H₂O₂ 30 % containing the dissolved Na₂SO₄ necessary to complete the stoichiometry of the adduct, keeping the volume constant through evaporation at 50 ± 2° C.

When the concentration of crystals in solution reached 200 g/l the operation was considered complete.

The product (SPS) contained 4.51 % of active oxygen when dry. The yields of transformation of raw materials were similar to those of Example 1.

### EXAMPLE 7

To the working solution from Example 1 parent liquors were added from the fusion of Na₂SO₄.10H₂O containing 31.5 % of Na₂SO₄ along with H₂O₂ 40 % containing the necessary dissolved NaCl to complete the stoichiometry of the adduct. The system was kept as a constant volume through evaporation at 50 ± 2° C.

Once the concentration of 200 g crystal/l had been reached, the operation was interrupted. The product (SPS) contained 4.52 % of active oxygen when dry.

The yields of transformation of raw materials were similar to those of Example 1.

### EXAMPLE 8

Starting from natural Mirabilite (Na₂SO₄.10H₂O) with a content in Na₂SO₄ of 42.5 % a procedure like the one described in Example 4 is followed. The results obtained are similar.

### Stability of the SPS

The intrinsic stability of the SPS is very high, as it does not decompose until it reaches a temperature of 180° C. In normalised tests usually applied to SPB and SPC, it shows a greater stability than these whiteners. This is logical as Na₂SO₄ and NaCl are neutral salts.

For its application in washing powders, the alkalinity of the medium was taken into account. Thus, during crystallisation, the polyphosphonate DEQUEST 2000 was added (US patent 4.323.465 from FMC Corp.), which was incorporated dissolved in H₂O₂ in sufficient quantity so that its content in the final product was 0.03 %. The addition of stabiliser dissolved in the solution of H₂O₂ guaranteed a perfect distribution thereof in the SPS.

The stability in alkaline medium was tested taking into account the impact that the incorporation of the SPS would have on a typical washing powder formulation with a content in Na₂SO₄ of 20 % and in SPB.H₂O of 10 %. Thus, to provide enough active oxygen and SPB.4H₂O, 25 % of SPS is required, which, at the same time, is equivalent to little more than 20 % of Na₂SO₄.

On eliminating the SPB, the washing powder also loses the alkalinity provided by the borate. Thus, to compensate for this deficiency and at the same time, to restore the initial mass (30 % of the washing powder) it was decided to add 5 % of anhydrous Na₂CO₃.

The stabilised SPS mixture + anhydrous Na₂CO₃ was prepared by joint milling, obtaining a powder with a d50 of 30 µm. In a second stage, this powder was dry blended by grinding with a dry base of alkaline washing powder prepared by atomisation. The final formulate, whose composition was: 25 % SPS, 20 % Na₂CO₃, 20 % sodium tripolyphosphate (TPF), 15 % sodium silicate (molar ratio 2:1), 15 % of sodium alkyl(Cl2)benzenosulphonate, 4 % of H₂O and 1 % of carboxymethyl cellulose (CMC), was introduced into semi-permeable bags and submitted, in an incubator, to a temperature of 50° C and a relative humidity of 90 % for 3 months. Each week, the residual activity was checked, finding a loss of less than 12 % at the end of the test.

## Claims

1. A procedure for obtaining the adduct 4Na₂SO₄.2H₂O₂.NaCl, in a fashion integrated into the manufacture of Na₂SO₄, regardless of the procedure for the production of Na₂SO₄ and in any of the stages, which comprises added to a working solution that comprises Na₂SO₄, NaCl and H₂O₂, a source of Na₂SO₄, a source of NaCl and a source of H₂O₂, in sufficient quantities to obtain said SPS adduct and the separation of said adduct.

2. A procedure according to claim 1, in which said source of Na₂SO₄ is a lye of a solution of a mineral that contains Na₂SO₄ or a recovery lye of a sub-product that contains Na₂SO₄.

3. A procedure according to claim 1, in which said source of Na₂SO₄ are the parent liquors from crystallisation of anhydrous Na₂SO₄.

4. A procedure according to claim 1, in which said source of Na₂SO₄ is a purge from the crystallisation of anhydrous Na₂SO₄ containing a high concentration of NaCl.

5. A procedure according to claim 1, in which said source of Na₂SO₄ is Na₂SO₄.10H₂O.

6. A procedure according to claim 1, in which said source of Na₂SO₄ is molten Na₂SO₄.10H₂O.

7. A procedure according to claim 1, in which said source of Na₂SO₄ are the parent liquors from crystallisation of Na₂SO₄.10H₂O.

8. A procedure according to claim 1, in which said source of Na₂SO₄ are the parent liquors from fusion of Na₂SO₄.10H₂O

9. A procedure according to any of claims 1 to 8, in which the concentration of H₂O₂ lies between 20 % and 70 %, preferably between 30 and 50 %.

10. A procedure according to any of claims 1 to 8, in which the working temperature lies between 10° C and 80° C, preferably between 45° C and 55° C.

11. A procedure according to any of claims 1 to 8, in which the concentration of NaCl in the working solution lies between 100 and 300 g/l, and is preferably 250 g/l.

12. A procedure according to any of claims 1 to 8, in which the concentration of H₂O₂ in the working solution lies between 100 and 700 g/l, and is preferably 150 g/l.

13. A procedure according to any of claims 1 to 8, in which the concentration of Na₂SO₄ lies between 5 % and 44.1 %.

14. A procedure according to any of claims 1 to 8, in which the concentration of NaCl dissolved in H₂O₂ lies between 0 and 300 g/l.

15. A procedure according to any of claims 1 to 8, in which the concentration of Na₂SO₄ dissolved in H₂O₂ lies between 0 and 300 g/l.
